# FASCICULE DE BREVET EUROPEEN

(11) **EP 0 918 418 B1**
(45) Date de publication et mention de la délivrance du brevet: **06.05.2004**
(21) Numéro de dépôt: 98402397.8
(22) Date de dépôt: 29.09.1998
(51) Int. Cl.: H04L 12/40, B60R 16/02

(54) **Système de transmission d'informations entre stations raccordées par un réseau multiplexé notamment pour véhicule automobile**
System zur Informationsübertragung zwischen durch ein Multiplexnetzwerk, angeschlossenen Stationen insbesondere für Kraftfahrzeuge
System for information transmission between stations connected through a multiplexed network, in particular for automotive vehicle

(30) Priorité: 10.10.1997 FR 9712709
(43) Date de publication de la demande: 26.05.1999
(73) Titulaire: AUTOMOBILES PEUGEOT, 75116 Paris (FR); AUTOMOBILES CITROEN, 92200 Neuilly-sur-Seine (FR)
(72) Inventeur: Martin, Paul Antoine, 78750 Mereil Marly (FR)
(74) Mandataire: Habasque, Etienne Joel Jean-François

(56) Documents cités:
- EP-A- 0 023 105
- EP-A- 0 095 389
- EP-A- 0 793 156
- US-A- 4 680 431
- US-A- 5 384 765

## Description

La présente invention concerne un système de transmission d'informations entre stations raccordées par un réseau multiplexé de transmission d'informations, notamment pour véhicule automobile.

On connaît déjà dans l'état de la technique, des systèmes de transmission de ce type qui permettent aux stations d'échanger des informations par l'intermédiaire d'un réseau multiplexé.

Ces réseaux peuvent par exemple être des réseaux de type VAN ou autres, comme décri par le brevet US 5 384 765 (Sakagami Atsushi et al.) publié le 24 Janvier 1995.

Chaque station raccordée au réseau comporte alors un module d'alimentation, un module d'unité centrale de traitement d'informations raccordé à un gestionnaire de protocole lui-même relié par un émetteur/réception de ligne au réseau.

En fonction des informations à transmettre, le réseau est donc placé soit dans un état dominant, soit dans un état récessif.

Cependant, en cas de défaillance par exemple du module d'unité centrale de traitement d'informations de l'une des stations raccordées au réseau, il peut se produire que ce module ou le gestionnaire de protocole de celle-ci pilote l'émetteur/récepteur de ligne de façon permanente dans un état dominant et place donc le réseau de communication en permanence dans un état dominant, de sorte que celui-ci est hors service.

On conçoit alors que la défaillance de l'une des stations connectées au réseau entraîne la perte totale du réseau et une très grande difficulté à identifier la station en cause.

Le but de l'invention est donc de résoudre ces problèmes.

A cet effet, l'invention a pour objet un système de transmission d'informations entre stations raccordées par un réseau multiplexé, notamment pour véhicule automobile, dans lequel chaque station comporte un gestionnaire de protocole et un émetteur/récepteur de ligne raccordé au réseau, caractérisé en ce que chaque station comporte entre le gestionnaire de protocole et l'émetteur/récepteur de ligne, une porte OU dont la sortie est reliée à l'émetteur/récepteur de ligne et recevant sur une entrée, la sortie du gestionnaire de protocole et sur une autre entrée, la sortie de moyens d'application temporisée d'un signal d'état récessif dont le fonctionnement est déclenché par la présence d'un signal d'état dominant à la sortie du gestionnaire de protocole, pour amener l'émetteur/récepteur de ligne à placer la sortie de la station dans un état récessif en cas de présence pendant une période de temps prédéterminée de l'état dominant à la sortie du gestionnaire de protocole.

L'invention sera mieux comprise à l'aide de la description qui va suivre, donnée uniquement à titre d'exemple et faite en se référant aux dessins annexés, sur lesquels :
- la Fig.1 représente un schéma synoptique illustrant la structure générale d'un système de transmission d'informations;
- la Fig.2 représente un schéma synoptique illustrant la structure générale d'une station entrant dans la constitution d'un tel système;
- la Fig.3 représente une partie d'une station dans laquelle sont intégrés des moyens d'application temporisée d'un signal d'état récessif;
- la Fig.4 représente un premier exemple de réalisation de tels moyens;
- la Fig.5 illustre le fonctionnement de ces moyens;
- la Fig.6 représente un schéma synoptique d'implantation de tels moyens; et
- la Fig.7 représente un schéma synoptique d'un second exemple de réalisation de tels moyens.

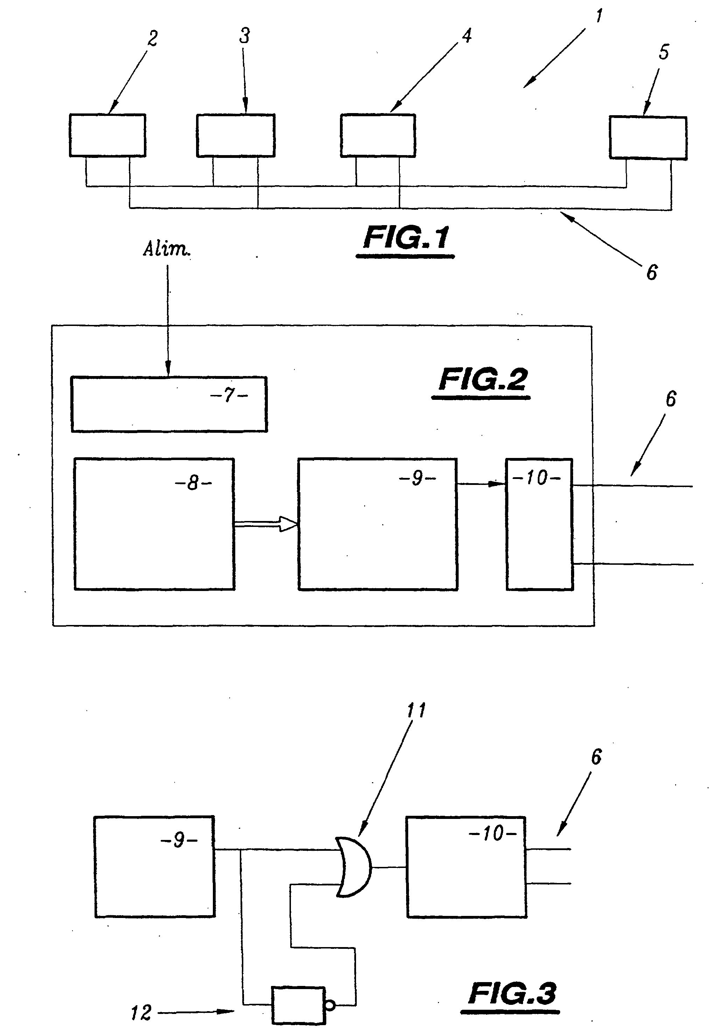

On a représenté sur la figure 1, un système désigné par la référence générale 1, de transmission d'informations, entre stations raccordées par un réseau multiplexé de transmission d'informations notamment pour véhicule automobile.

Les stations sont par exemple désignées par les références générales 2,3,4 et 5 sur cette figure et sont reliées par un réseau multiplexé de transmission d'informations 6.

Ce réseau également communément appelé bus de transmission d'informations, peut par exemple être un bus comportant une ligne de transmission de données ou deux lignes de transmission de données complémentaires de façon classique.

On sait que de tels systèmes de transmission d'informations sont déjà bien connus dans l'état de la technique, de sorte que l'on ne rentrera pas dans le détail de la description de leur structure.

On notera simplement en regard de la figure 2, que chaque station raccordée à ce réseau comporte un module d'alimentation désigné par la référence générale 7, un module d'unité centrale de traitement d'informations désigné par la référence générale 8, raccordé à un gestionnaire de protocole désigné par la référence générale 9, lui-même relié à un émetteur/récepteur de ligne désigné par la référence générale 10, la sortie de cet émetteur/récepteur de ligne étant reliée au réseau de transmission d'informations 6.

On conçoit alors qu'en cas de défaillance de cette station et notamment du module d'unité centrale 8 ou du gestionnaire de protocole 9, si l'émetteur/récepteur de ligne 10 reçoit un signal dominant à son entrée, il place le réseau de transmission d'informations 6 dans un état dominant, ce qui le rend inutilisable pour le reste des stations.

Pour résoudre ces problèmes et comme on peut le voir sur la figure 3, chaque station raccordée au réseau comporte entre le gestionnaire de protocole 9 et l'émetteur/récepteur de ligne 10 raccordé au réseau 6, une porte OU désignée par la référence générale 11, dont la sortie est raccordée à l'émetteur/récepteur de ligne 10 et qui reçoit sur une entrée, la sortie du gestionnaire de protocole 9 et sur une autre entrée, la sortie de moyens 12 d'application temporisée d'un signal d'état récessif, dont le fonctionnement est déclenché par la présence d'un signal d'état dominant à la sortie du gestionnaire de protocole 9.

La structure de ces moyens d'application désignés par la référence générale 12 sera décrite plus en détail par la suite.

On conçoit alors que ces moyens permettent d'amener l'émetteur/récepteur de ligne 10 à placer la sortie de la station dans un état récessif en cas de présence pendant une période de temps prédéterminée de l'état dominant à la sortie du gestionnaire de protocole 9.

Ceci permet alors de placer automatiquement la sortie de la station défaillante dans un état récessif pour permettre au reste du système de fonctionner dans un mode dégradé.

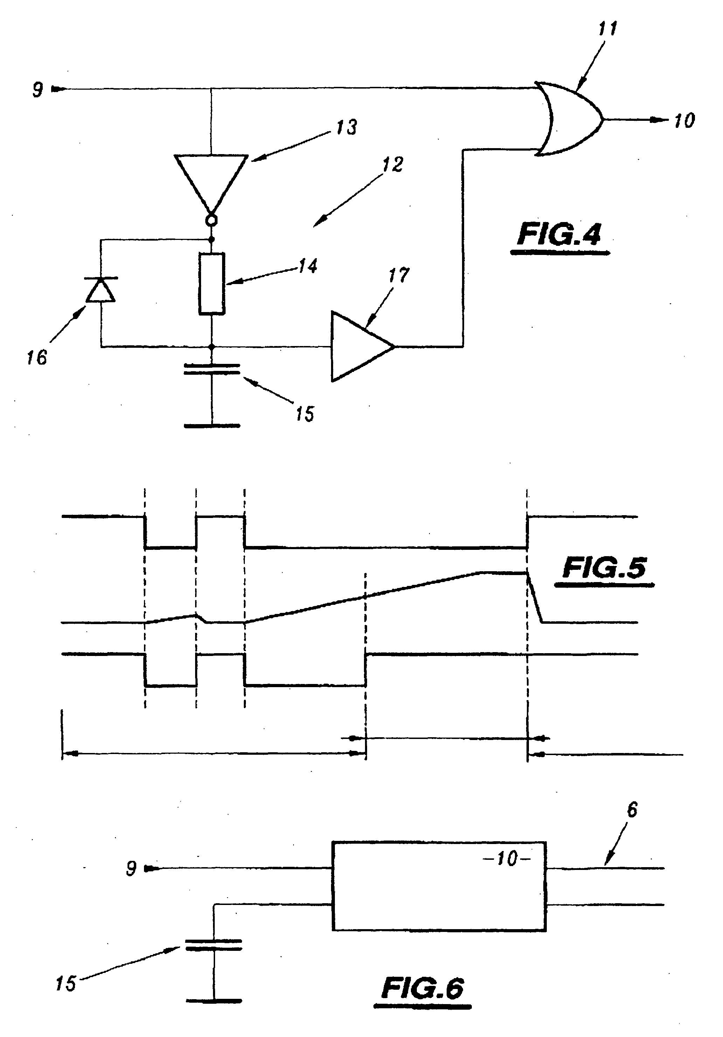

Un exemple de réalisation de ces moyens d'application 12 est représenté sur la figure 4.

On reconnaît en effet sur cette figure, la porte OU 11 qui reçoit sur une première entrée, la sortie du gestionnaire de protocole 9.

Cette sortie du gestionnaire de protocole est également reliée à l'entrée d'un inverseur désigné par la référence générale 13 dont la sortie est reliée à une résistance 14 elle-même reliée à un condensateur 15, cette résistance et ce condensateur constituant un circuit RC de type classique.

Une diode de roue libre 16 est connectée en parallèle sur la résistance 14 et un circuit de mise en forme constitué par exemple par un comparateur 17, est raccordé entre le point milieu entre la résistance 14 et le condensateur 15 et l'autre entrée de la porte OU 11.

On conçoit alors en regard des figures 4 et 5 que lorsque la sortie du gestionnaire de protocole 9 est à l'état O, c'est-à-dire pour engendrer une requête d'établissement d'un état dominant, cet état est établi sur le réseau par l'émetteur/récepteur de ligne 10 tant que la seconde entrée de la porte OU 11, c'est-à-dire la sortie des moyens d'application temporisée 12, reste à l'état O. Ceux-ci sont réinitialisés à chaque transition de la sortie du gestionnaire de protocole dans un état récessif 1.

Ceci caractérise le fonctionnement normal de la station.

Par contre, si cette sortie du gestionnaire de protocole 9 reste dans un état dominant 0 pendant une période de temps prédéterminée, c'est-à-dire en fait supérieure à ce qu'il est normal de rencontrer vis à vis du protocole de communication utilisé, la sortie des moyens de mise en forme 17 bascule d'un état 0 dominant vers un état 1 récessif et impose alors par l'intermédiaire de la porte OU 11, en entrée de l'émetteur/récepteur de ligne 10, une requête afin d'engendrer un état récessif 0 sur le réseau 6.

En effet, le condensateur 15 se charge progressivement à travers la résistance 14 jusqu'au moment où la tension aux bornes de celui-ci dépasse par exemple un seuil prédéterminé associé au comparateur 17 formant les moyens de mise en forme, pour provoquer un basculement de sa sortie.

Ceci caractérise le fonctionnement en mode dégradé du réseau.

Comme on l'a indiqué précédemment, les moyens de mise en forme 17 peuvent être constitués par un comparateur qui reçoit alors une tension de seuil établie de façon classique.

La diode de roue libre 16 permet quant à elle d'assurer une décharge rapide du condensateur 15 dès que la commande de sortie du gestionnaire de protocole 9 repasse à l'état 1 récessif.

Comme on peut le voir sur la figure 6, ce circuit peut être intégré au moins en partie directement dans l'émetteur/récepteur de ligne 10.

Cependant, en raison de la difficulté d'intégrer des condensateurs de forte valeur dans celui-ci, le condensateur 15 peut également être constitué par un composant externe à celui-ci.

On conçoit alors que la résistance 14, la diode de roue libre 16 et les moyens de mise en forme 17 peuvent être intégrés dans l'émetteur/récepteur de ligne 10, le condensateur 15 étant raccordé entre une broche de raccordement externe de celui-ci et la masse.

Ceci permet par ailleurs en cas d'utilisation particulière de cet émetteur/récepteur de ligne, d'inhiber le fonctionnement de ces moyens en connectant cette broche à la masse.

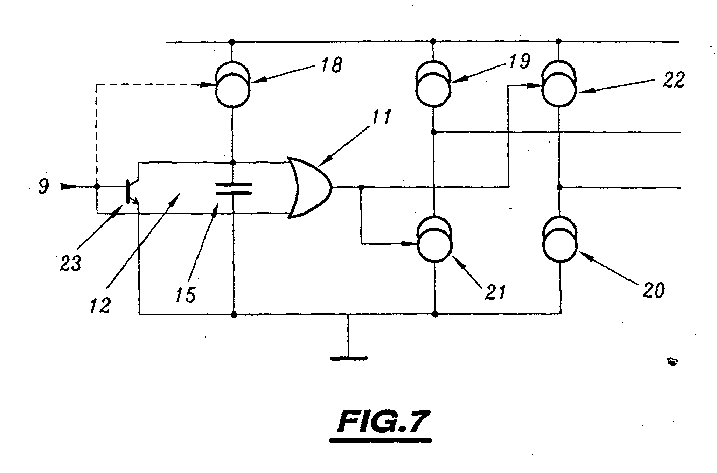

Il va de soi bien entendu que d'autres modes de réalisation de ce dispositif peuvent être envisagés comme celui représenté sur la figure 7.

En effet, il est également possible de remplacer l'inverseur 13 et la résistance 14 décrits en regard de la figure 4, destinés à charger le condensateur 15 par un générateur de courant, tel que le générateur désigné par la référence générale 18 sur cette figure 7.

Ce générateur est alors piloté par la sortie du gestionnaire de protocole 9 pour charger le condensateur 15, le point milieu entre ce générateur de courant 18 et ce condensateur 15 étant relié à une entrée de la porte OU 11 recevant sur son autre entrée, la sortie du gestionnaire de protocole 9.

On sait en effet que de tels générateurs sont déjà utilisés dans de tels composants d'émetteur/récepteur de ligne pour engendrer les courants récessifs et les courants dominants sur les lignes du réseau de transmission d'informations.

Ceci permet de contrôler de manière très précise le temps de charge de ce condensateur.

Sur cette figure 7, les générateurs de courant récessif sont désignés par les références générales 19 et 20 respectivement, tandis que les générateurs de courant dominant sont désignés par les références générales 21 et 22 respectivement.

Un transistor de décharge désigné par la référence générale 23 peut également être raccordé en parallèle aux bornes du condensateur 15 pour assurer une décharge rapide de celui-ci dès que la commande issue du gestionnaire de protocole 9 passe à l'état 1.

Ce transistor doit être dimensionné de manière à décharger ce condensateur 15 en un temps approprié à la vitesse maximale de transmission de l'émetteur/récepteur de ligne, c'est-à-dire par exemple 4µ/sec., à 250 Kbits/sec.

On conçoit alors qu'une telle structure présente un certain nombre d'avantages dans la mesure où elle permet de faire fonctionner le réseau en mode dégradé en évitant à une station défaillante de bloquer celui-ci et de le rendre inutilisable pour les autres stations.

Ceci est obtenu en utilisant une porte OU recevant sur une entrée la sortie du gestionnaire de protocole et sur une autre entrée la sortie de moyens d'application temporisée d'un signal d'état récessif dont le fonctionnement est déclenché par la présence d'un signal d'état dominant à la sortie du gestionnaire de protocole pendant une période de temps prédéterminée.

Ceci permet alors d'amener l'émetteur/récepteur de ligne à placer la sortie de la station dans un état récessif en cas de présence pendant une période de temps excessive de l'état dominant à la sortie du gestionnaire de protocole.

Ces moyens peuvent par exemple être activés en cas de dépassement très important de la durée maximale de l'état dominant permise par le protocole, c'est-à-dire par exemple une durée supérieure ou égale à dix fois cette durée maximale.

On sait par exemple que pour le protocole VAN, cette valeur est de 5 temps bits.

Il va de soi bien entendu que d'autres modes de réalisation de ce système peuvent être envisagés.

## Revendications

1. Système de transmission d'informations entre stations raccordées par un réseau multiplexé, notamment pour véhicule automobile, dans lequel chaque station (2,3,4,5) comporte un gestionnaire de protocole (9) et un émetteur/récepteur de ligne (10) raccordé au réseau (6), **caractérisé en ce que** chaque station comporte entre le gestionnaire de protocole (9) et l'émetteur/récepteur de ligne (10), une porte OU (11) dont la sortie est reliée à l'émetteur/récepteur de ligne (10) et recevant sur une entrée, la sortie du gestionnaire de protocole (9) et sur une autre entrée, la sortie de moyens (12) d'application temporisée d'un signal d'état récessif dont le fonctionnement est déclenché par la présence d'un signal d'état dominant à la sortie du gestionnaire de protocole (9), pour amener l'émetteur/récepteur de ligne (10) à placer la sortie de la station dans un état récessif en cas de présence pendant une période de temps prédéterminée de l'état dominant à la sortie du gestionnaire de protocole.

2. Système selon la revendication 1, **caractérisé en ce que** les moyens d'application temporisée (12) comprennent un inverseur (13) dont l'entrée est reliée à la sortie du gestionnaire de protocole (9) et dont la sortie est reliée à un circuit RC (14,15) dont le point milieu est raccordé à l'entrée de moyens de mise en forme (17) dont la sortie est reliée à l'autre borne de la porte OU (11), des moyens de roue libre (16) étant reliés en parallèle aux bornes de la résistance (14).

3. Système selon la revendication 1, **caractérisé en ce que** les moyens d'application temporisée (12) comprennent un générateur de courant (18) piloté par la sortie du gestionnaire de protocole (9) et relié à un condensateur (15), le point milieu entre le générateur de courant (18) et le condensateur (15) étant relié à une entrée de la porte OU (11) et **en ce que** des moyens de roue libre (23) sont connectés en parallèle sur le condensateur (15).

4. Système selon l'une quelconque des revendications précédentes, **caractérisé en ce que** la période de temps prédéterminée de l'état dominant est égale ou supérieure à dix fois la durée maximale de cet état permise par le protocole mis en oeuvre dans le réseau.

5. Système selon l'une quelconque des revendications précédentes, **caractérisé en ce qu'**au moins une partie des moyens d'application temporisée (12) est intégrée dans l'émetteur/récepteur de ligne.

## Claims

1. System for information transmission between stations connected by a multiplexed network, in particular for motor vehicles, in which each station (2,3,4,5) has a protocol manager (9) and a line transmitter/receiver (10) connected to the network (6), **characterised in that** each station has, between the protocol manager (9) and the line transmitter/receiver (10), an OR gate (11) whose output is connected to the line transmitter/receiver (10) and which receives, at one input, the output of the protocol manager (9) and, at another input, the output of means (12) for delayed application of a recessive-state signal whose operation is triggered by the presence of a dominant-state signal at the output of the protocol manager (9), in order to induce the line transmitter/receiver (10) to put the output of the station into a recessive state in the event of the dominant state being present at the output of the protocol manager for a predetermined period of time.

2. System according to Claim 1, **characterised in that** the delayed-application means (12) comprise an inverter (13) whose input is connected to the output of the protocol manager (9) and whose output is connected to an RC circuit (14,15) whose centre point is connected to the input of shaping means (17) whose output is connected to the other terminal of the OR gate (11), freewheeling means (16) being connected in parallel to the terminals of the resistor (14).

3. System according to Claim 1, **characterised in that** the delayed-application means (12) comprise a current generator (18) controlled by the output of the protocol manager (9) and connected to a capacitor (15), the centre point between the current generator (18) and the capacitor (15) being connected to an input of the OR gate (11) and **in that** freewheeling means (23) are connected in parallel to the capacitor (15).

4. System according to any one of the preceding claims, **characterised in that** the predetermined period of time of the dominant state is equal to or greater than ten times the maximum duration of this state permitted by the protocol employed in the network.

5. System according to any one of the preceding claims, **characterised in that** at least part of the delayed-application means (12) is integrated in the line transmitter/receiver.

## Patentansprüche

1. System zur Informationsübertragung zwischen an ein Multiplexnetzwerk zur Informationsübertragung angeschlossenen Stationen, insbesondere für Kraftfahrzeuge, wobei jede Station (2,3,4,5) eine Protokollführ-Vorrichtung (9) und eine an das Netzwerk (6) angeschlossene Leitungs-Sende/Empfangs-Vorrichtung (10) aufweist, **dadurch gekennzeichnet, dass** jede Station zwischen der Protokollführ-Vorrichtung (9) und der Leitungs-Sende/Empfangs-Vorrichtung (10) ein ODER-Gatter (11) aufweist, dessen Ausgang mit der Leitungs-Sende/Empfangs-Vorrichtung (10) verbunden ist und welches an einem Eingang den Ausgang der Protokollführ-Vorrichtung (9) aufnimmt, und am anderen Eingang den Ausgang von Vorrichtungen (12) zur verzögerten Anwendung eines Rezessivzustand-Signals, deren Betrieb durch die Präsenz eines Dominantzustand-Signals an dem Ausgang der Protokollführ-Vorrichtung (9) gestartet wird, um die Leitungs-Sende/Empfangs-Vorrichtung (10) zu veranlassen, den Ausgang der Station in einen Rezessiv-Zustand zu versetzen, falls über eine vordefinierte Zeitspanne hinweg der Dominantzustand am Ausgang der Protokollführ-Vorrichtung besteht.

2. Vorrichtung gemäß Anspruch 1, **dadurch gekennzeichnet, dass** die Vorrichtungen zur verzögerten Anwendung (12) einen Inverter (13) aufweisen, dessen Eingang mit dem Ausgang der Protokollführ-Vorrichtung (9) verbunden ist, und dessen Ausgang mit einem RC-Schaltkreis (14,15) verbunden ist, dessen Mittelpunkt mit dem Eingang von Formungs-Vorrichtungen (17) verbunden ist, deren Ausgang mit dem anderen Anschluss des ODER-Gatters (11) verbunden ist, wobei Freilauf-Vorrichtungen (16) parallel zu dem Widerstand (14) and dessen Anschlüssen angeschlossen sind.

3. Vorrichtung gemäß Anspruch 1, **dadurch gekennzeichnet, dass** die Vorrichtungen zur verzögerten Anwendung (12) eine Stromquelle (18) aufweisen, welche von der Protokollführ-Vorrichtung (9) gesteuert ist, und welche an einen Kondensator (15) angeschlossen ist, wobei der Mittelpunkt zwischen der Stromquelle (18) und dem Kondensator (15) mit einem Eingang des ODER-Gatters (11) verbunden ist, und dadurch, dass Freilauf-Vorrichtungen (23) parallel zu dem Kondensator (15) angeschlossen sind.

4. Vorrichtung gemäß einem der vorhergehenden Ansprüche, **dadurch gekennzeichnet, dass** der vordefinierte Zeitraum des Dominantzustands größer oder gleich zehn Mal der von dem auf dem Netzwerk betriebenen Protokoll erlaubten Maximaldauer dieses Zustandes ist.

5. Vorrichtung gemäß einem der vorhergehenden Ansprüche, **dadurch gekennzeichnet, dass** wenigstens ein Teil der Vorrichtungen zur verzögerten Anwendung (12) in die Leitungs-Sende/Empfangs-Vorrichtung integriert ist.
